# EUROPÄISCHE PATENTSCHRIFT

(11) **EP 1 156 857 B1**
(45) Veröffentlichungstag und Bekanntmachung des Hinweises auf die Patenterteilung: **24.05.2006**
(21) Anmeldenummer: 00903427.3
(22) Anmeldetag: 11.02.2000
(51) Int. Cl.: A63B 1/00, A63B 9/00, E04B 1/58, A47B 47/00

(54) **BAUKASTENSYSTEM ZUM AUFBAU EINES RAUMSTRUKTURELEMENTS**
MODULAR SYSTEM FOR ASSEMBLING AN INTERIOR STRUCTURE
TECHNIQUE DE CONSTRUCTION MODULAIRE POUR LA CONSTRUCTION D'UNE STRUCTURE D'INTERIEUR

(30) Priorität: 23.02.1999 AT 30599
(43) Veröffentlichungstag der Anmeldung: 28.11.2001
(73) Patentinhaber: MFT-Multi Funktionale Trainingsgeräte GmbH, 2353 Guntramsdorf (AT)
(72) Erfinder: AIGNER, Ewald, A-1100 Wien (AT); RASCHNER, Christian, A-6068 Mils (AT)
(74) Vertreter: Gibler, Ferdinand
(86) Internationale Anmeldenummer: PCT/AT2000/000034
(87) Internationale Veröffentlichungsnummer: WO 2000/050124

(56) Entgegenhaltungen:
- GB-A- 2 006 297
- US-A- 4 227 688
- US-A- 5 326 337

## Beschreibung

Die Erfindung betrifft ein Baukastensystem zum Aufbau eines Raumstrukturelements, insbesondere zu Trainings- oder Spielzwecken, mit elastischen Längsgliedern und einer Vielzahl von Verbindungselementen, wobei jedes Längsglied an seinen Längsenden mittels der Verbindungselemente mit jeweils einem oder mehreren Längsgliedern verbindbar ist.

Raumstrukturelemente für Trainings- und Spielsysteme existieren in verschiedensten Bauweisen. So bestehen die bekannten Gymnastikvorrichtungen, wie Kasten, Barren o.ä. aus verschiedenen Einzelelementen, die für verschiedene Übungen oder Spiele in ihrem Aufbau veränderbar sind.

Ein Nachteil der bekannten Systeme dieser Art besteht in der relativ platzaufwendigen Lagerung der Einzelteile, die teilweise sehr hohes Eigengewicht aufweisen. Schon allein der Aufbau dieser Systeme zu Trainings- oder Spielzwecken stellt für Kinder oder ältere Personen eine erhebliche Anstrengung dar. In den meisten Fällen ist dabei die Hilfe von kräftigen Erwachsenen erforderlich, um die schweren Teile zu tragen und zusammenzufügen. Nicht selten kommt es bei der Aufstellung zu schwierig zu bewältigenden Situationen, sodaß die Gefahr des Einklemmens, Quetschens o.ä. besteht. Kinder oder ältere Personen sind daher immer auf die Hilfe von kräftigem Hilfspersonal gebunden. Auch die vielfach starre Anordnung von Stangen oder ähnlichen Teilen stellt ein oft schwerwiegendes Problem dar, da es während des Trainierens oder des Spielens zu Verletzungen kommen kann.

Die US-A-4 227 688 offenbart ein Raumstrukturelement aus zwei starren senkrechten Längsgliedern und einem elastischen waagrechten Längsglied, welche durch Verbindungselemente verbunden sind. Nachteilig ist, daß nicht unterschiedliche Raumstrukturelemente gebildet werden können. Weiters kann es durch die starre Anordnung der senkrechten Längsglieder während des Trainierens oder des Spielens zu Verletzungen kommen.

Aufgabe der Erfindung ist es, ein Baukastensystem der eingangs genannten Art anzugeben, mit dem ein möglichst gefahrloses und vielfältiges Trainings- und Spielprogramm vollzogen werden kann und dessen Aufstellung ohne Hilfskräfte oder schwierig zu bewältigenden Vorgängen bewältigbar ist.

Weitere Aufgabe der Erfindung ist, ein Baukastensystem mit relativ wenigen und leicht zu verstauenden Einzelteilen zu schaffen, welches dennoch die Möglichkeit einer sehr vielfältigen Gestaltung von Raumstrukturelementen bietet.

Erfindungsgemäß wird dies dadurch erreicht, daß alle Längsglieder elastisch sind, und daß alle Längsglieder aus Schaumstoff oder Gummi gebildet sind, wodurch das Raumstrukturelement als Ganzes nachgiebig gegenüber einer äußeren Belastung ist.

Dadurch kann mit Hilfe des erfindungsgemäßen Baukastensystems eine beliebige Anordnung von Längsgliedern getroffen werden, um das Trainieren oder das Spielen zu ermöglichen. Der Aufbau des Systems kann durch einfaches Zusammenfiigen der Längsglieder vorgenommen werden, sodaß selbst kleine Kinder ohne Aufsicht von Erwachsenen eine gewünschte Trainings- oder Spieleinheit rasch aufbauen können. Durch die elastischen Längsglieder kann es während des Zusammenbaus und während der Betätigung an dem erfindungsgemäßen Baukastensystem zu keinen gefährlichen Situationen kommen. Kinder können dabei unbeaufsichtigt sich selbst überlassen werden. Ein unbeabsichtigtes Fallen oder Stolpern führt aufgrund der weichen Längsglieder zu keinen Verletzungen.

In weiterer Ausbildung der Erfindung kann vorgesehen sein, daß die Verbindungselemente Verbindungsstücke umfassen, welche zumindest zwei in unterschiedliche Richtungen verlaufende Löcher oder zumindest zwei in unterschiedliche Richtungen verlaufende, abstehende Stifte aufweisen, und daß an den Längsenden jedes Längsglieds gegengleiche Stifte oder Löcher ausgebildet sind, die in die Löcher oder in die Stifte der Verbindungsstücke spielfrei einsteckbar sind.

Mit Hilfe dieser Verbindungselemente lassen sich je nach Bedarf unterschiedliche Raumstrukturen durch Zusammenstecken von Verbindungsstücken und gegengleichen Stiften oder Löchern errichten. Es lassen sich dadurch mit einem einzigen Verbindungselement gleicher Form und den entsprechenden Längsgliedern eine sehr hohe Anzahl von unterschiedlichen Raumstrukturelementen aufbauen, wodurch sich sowohl die Herstellung, die Lagerhaltung und auch der Gebrauch des erfindungsgemäßen Baukastensystems vereinfachen läßt. Selbst bei Verlust einiger Bestandteile des Baukastensystems kann dieses nach wie vor verwendet werden.

Ein weiteres Merkmal der Erfindung kann darin bestehen, daß die Verbindungselemente Verbindungsstücke, welche zumindest ein Durchgangsloch und zumindest ein weiteres Loch aufweisen, und zumindest ein elastisches Band mit einem vorzugsweise kreisförmigen Querschnitt umfassen, welches elastische Band im unbelasteten Zustand einen größeren Durchmesser und im gestreckten Zustand einen kleineren Durchmesser als das Durchgangsloch der Verbindungsstücke aufweist.

Das elastische Band kann im gestreckten Zustand durch das Durchgangsloch des Verbindungsstücks gezogen und durch Entspannen des Bandes fixiert werden, da dieses aufgrund seiner elastischen Eigenschaften bestrebt ist, seinen Durchmesser in den Ausgangszustand zu bringen, wodurch das Verbindungsstück an der jeweiligen Stelle festgehalten wird. Auf diese Weise können mehrere Verbindungsstücke zueinander beabstandet auf dem elastischen Band angeordnet werden, wobei die Verbindungsstücke zugleich die Möglichkeit bieten, Verbindungen mit den Längsgliedern des erfindungsgemäßen Baukastensystems herzustellen, sodaß mit Hilfe des elastischen Bandes eine einfache Beabstandung von mehreren Längsgliedern getroffen werden kann.

Gemäß einer weiteren Variante der Erfindung kann das Verbindungsstück kugelförmig ausgebildet sein und zumindest drei orthogonal zueinander durch den Mittelpunkt verlaufende Löcher aufweisen, wobei eines der Löcher ein Durchgangsloch und die beiden anderen Löcher Sacklöcher sind. Das eine Durchgangsloch erlaubt eine Kombination der Längsglieder mit dem elastischen Band.

Die orthogonale Orientierung der Löcher ermöglicht den Aufbau von Raumstrukturelementen mit rechtwinkeliger Struktur, wobei die kugelförmigen Verbindungsstücke die Verletzungsgefahr minimieren helfen.

In weiterer Ausbildung der Erfindung kann das kugelförmige Verbindungsstück ein in der Ebene zweier orthogonaler Löcher verlaufendes und in einem Winkel α zur Mittelachse eines dieser Löcher angestelltes, zusätzliches Loch aufweisen.

Auf diese Weise können Raumstrukturelemente mit einer relativ hohen Komplexität verwirklicht werden, wobei bei einem Winkel α von 30° auch Raumstrukturen mit dreieck- oder sechseckförmigern Aufbau verwirklicht werden können.

Gemäß einer weiteren Ausführungsform der Erfindung können die elastischen Längsglieder zylindrisch, vorzugsweise rohrförmig, ausgebildet sein.

Mit dieser Formgebung kann ein einfach verwirklichbares und sehr vielfältig einsetzbares Baukastensystem geschaffen werden.

Eine besonders biegsame und entsprechend weiche Raumstruktur ergibt sich, wenn gemäß einem weiteren Ausführungsbeispiel der Erfindung die elastischen Längsglieder jeweils aus einem Schaumstoffrohr gebildet sind.

Gemäß einer anderen Variante der Erfindung können die Längsglieder aus Kunststoffrohren mit einem äußeren und einem konzentrischen, inneren Rohrquerschnitt gebildet sein, wobei der innere und der äußere Rohrquerschnitt durch radial verlaufende Distanzstege einstückig miteinander verbunden sind.

Durch diese Strukturierung des Rohrquerschnitts kann zugleich eine hohe mechanische Belastbarkeit und eine für den Verwendungszweck geeignete Elastizität bei geringer Wandstärke des inneren und des äußeren Rohrquerschnitts erzielt werden. Wird als Rohrmaterial EPDM verwendet, so sind die damit erzeugten Längsglieder für Sport- und Spielzwecke praktisch unverwüstlich.

Ein weiteres Merkmal der Erfindung kann darin bestehen, daß die elastischen Längsglieder an ihren Längsenden mit Abschlußelementen versehen sind, an denen entlang der Mittelachse der Längsglieder abstehende Stifte angeformt sind, die in die Löcher der kugelförmigen Verbindungsstücke einsteckbar sind.

Die Abschlußelemente können dabei an die Längsenden der Längsglieder angeformt sein oder sie können auf die Längsglieder aufgesteckt und z.B. mit diesen verklebt sein.

Das Aufstecken auf die Längsenden der Längsglieder kann erleichtert werden, indem in weiterer Ausbildung der Erfindung die Abschlußelemente einen zylindrischen Ansatz aufweisen, dessen Durchmesser gleich dem Innendurchmesser der Schaumstoffrohre oder dem Innendurchmesser des inneren Rohrquerschnitts der Kunststoffrohre entspricht, sodaß der Ansatz der Abschlußelemente in die stirnseitigen Enden der Längsglieder einsteckbar ist.

Eine weitere Ausbildung der Erfindung kann darin bestehen, daß die Verbindungselemente jeweils aus einem würfelförmigen Verbindungsstück mit zumindest zwei von den Würfelflächen abstehenden Einsteckstiften gebildet sind, welche in den Innendurchmesser von rohrförmigen elastischen Längsgliedern einsteckbar sind.

Diese Art der Verbindungsstücke ermöglicht eine sehr stabile Verbindung zwischen den Längsgliedem.

Gemäß einem weiteren Merkmal der Erfindung kann vorgesehen sein, daß die Verbindungselemente jeweils aus einem Winkelstück mit zwei in einem rechten Winkel voneinander abstehenden Einsteckstiften gebildet sind, welche in den Innendurchmesser der rohrförmigen elastischen Längsglieder einsteckbar sind. Die Winkelstücke können jeweils nur zwei Längsglieder miteinander verbinden, weisen aber den Vorteil auf, daß keine überflüssigen Steckelemente bei einer Verbindung bestehen bleiben, an denen die trainierenden oder spielenden Personen hängenbleiben könnten.

Zur Erzielung eines besseren Halts innerhalb des Innendurchmessers der rohrförmigen Längsglieder können die Einsteckstifte wulstförmige Querschnittsverdickungen aufweisen. Damit wird ein Herausrutschen aus dem Rohrinneren verhindert.

In weiterer Ausbildung der Erfindung kann ein Teil der vorgesehenen Längsglieder an einem Ende mit einer Standfläche, vorzugsweise einer Standscheibe, verbunden sein. Dadurch kann das erfindungsgemäße Baukastensystem für den Aufbau sehr standfester Raumstrukturen herangezogen werden.

Weiters betrifft die Erfindung eine Springbarriere unter Verwendung eines erfindungsgemäßen Baukastensystems, mit deren Hilfe ein wirksames Trainieren der Sprungmuskulatur möglich sein soll, wobei die Gefahr einer Verletzung der trainierenden Person möglichst gering gehalten werden soll.

Erfindungsgemäß wird dies dadurch erreicht, daß die mit den Standscheiben versehenen, senkrecht stehenden Längsglieder über waagrechte Längsglieder voneinander beabstandet angeordnet sind, wobei jeweils zwei waagrechte Längsglieder und ein senkrecht stehendes Längsglied über die Verbindungselemente miteinander verbunden sind, und wobei der von den beiden waagrechten Längsgliedern eingeschlossene Winkel unterschiedlich wählbar ist.

Dadurch kann ein Springhindernis beliebiger Höhe und Länge aufgebaut werden, welches durch seinen elastischen Aufbau ein äußerst schonendes und gefahrloses Training der Muskulatur ermöglicht und zugleich sehr rasch aufgestellt werden kann. Im auseinandergenommenen Zustand nimmt die erfindungsgemäße Barriere nur äußerst geringen Platz in Anspruch, wodurch auch eine Anwendung bei sehr eingeschränkten Platzverhältnissen möglich ist.

Nachfolgend wird die Erfindung anhand der in den angeschlossenen Zeichnungen dargestellten Ausfilhrungsbeispiele eingehend erläutert. Es zeigt dabei
Fig.1 eine Vorderansicht von Teilen einer Ausführungsform des erfindungsgemäßen Baukastensystems in zusammengestecktem Zustand;
Fig.2 einen Querschnitt durch ein Ende eines rohrförmigen Längsglieds des Baukastensystems gemäß Fig.1;
Fig.3 eine Stirnansicht einer weiteren Ausführungsform des rohrförmigen Längsglieds;
Fig.4 ein Längsschnitt durch das rohrförmige Längsglied gemäß Fig.4;
Fig.5 eine Draufsicht auf eine Ausführungsform eines Verbindungsstückes;
Fig.6 das um 90° gedrehte Verbindungsstück gemäß Fig. 5;
Fig.7 einen Erdkeil;
Fig.8 eine gewölbte Standplatte;
Fig.9 ein Verbindungsstück;
Fig.10 ein Detail eines mit Hilfe einer weiteren Ausführungsform des erfindungsgemäßen Baukastensystems zusammengesetzten Raumstrukturelements;
Fig.11 und 12 jeweils eine Schrägrißdarstellung eines weiteren Raumstrukturelements;
Fig. 13 eine Draufsicht auf ein weiteres Raumstrukturelement;
Fig. 14 und Fig. 15 einen Grundriß und eine Schrägrißdarstellung eines weiteren Raumstrukturelements;
Fig.16 und Fig. 17 einen Grundriß und eine Schrägrißdarstellung eines weiteren Raumstrukturelements;
Fig. 18 eine Schrägrißdarstellung eines weiteren Raumstrukturelements;
Fig. 19 eine Draufsicht auf ein Detail eines weiteren Raumstrukturelements auf der Basis einer weiteren Ausführungsform des Baukastensystems;
Fig.20, 21 und 22 jeweils eine Schrägrißdarstellung eines mittels erfindungsgemäßem Baukastensystem aufgebauten Raumstrukturelements;
Fig.23 eine perspektivische Darstellung einer aus einer weiteren Ausführungsform des erfindungsgemäßen Baukastensystems aufgebauten Springbarriere;
Fig.24 eine Draufsicht auf ein in Fig.25 verwendetes Winkelstück und
Fig.25 eine Vorderansicht von Teilen einer weiteren Ausführungsform des erfindungsgemäßen Baukastensystems in zusammengestecktem Zustand.

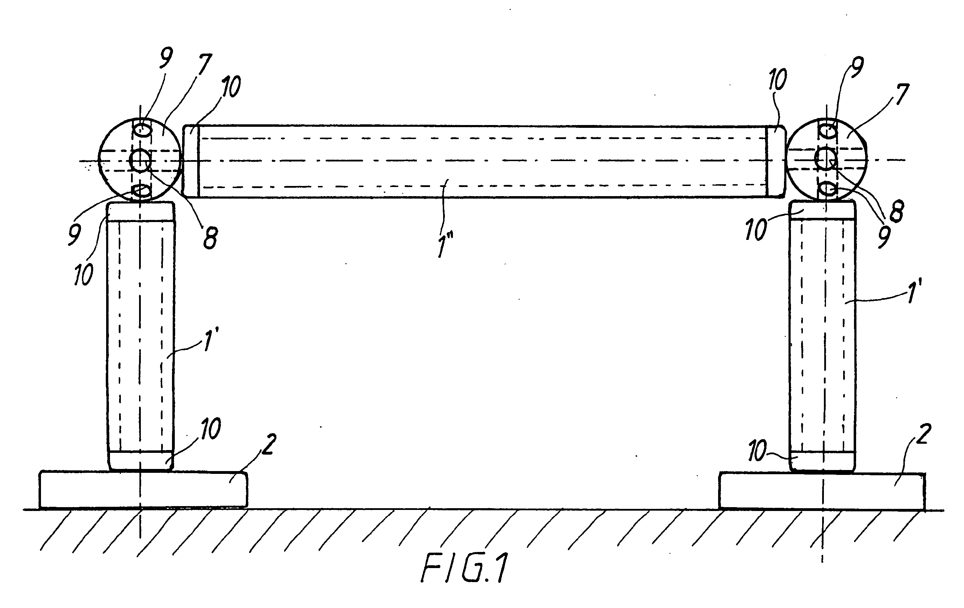

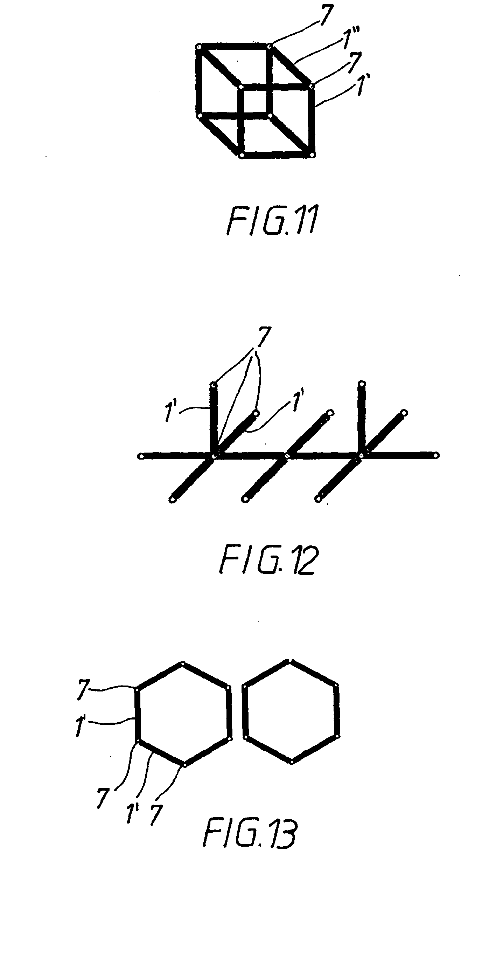

Fig.1 zeigt Teile eines Baukastensystems zum Aufbau eines Raumstrukturelements, das insbesondere zu Trainings- oder Spielzwecken verwendbar ist. Um einen besonders gefahrlosen Umgang mit diesem zu ermöglichen und eine besondere Vielfalt an Verwendungszwecken zu ermöglichen, sind dabei erfindungsgemäß eine Vielzahl von elastischen Längsgliedern 1', 1" und eine Vielzahl von Verbindungselementen 7, 10 vorgesehen, wobei jedes Längsglied 1', 1" an seinen Längsenden mittels der Verbindungselemente 7, 10 mit jeweils einem oder mehreren Längsgliedern 1', 1" verbindbar ist. Dadurch kann das erfindungsgemäße Baukastensystem je nach Bedarf für die verschiedensten Trainings- und Spielzwecke verwendet werden. Durch die zusammen mit den Verbindungselementen 7, 10 das Raumstrukturelement bildenden, elastischen Längsglieder 1', 1" ist dieses sehr unempfindlich gegen Stöße von damit trainierenden oder spielenden Personen und verhindert durch seine elastische Formgebung Unfälle, die sonst bei starren Längsgliedern sehr häufig auftreten würden, wenn etwa eine übende Person über eines der waagrecht angeordneten Längsglieder 1" stolperte. Fig.1 zeigt dabei nur eine einfache Variante eines Zusammenbaus, tatsächlich können bei ausreichender Anzahl von Längsgliedern 1', 1" und Verbindungselementen 7, 10 beliebige Raumstrukturen gebildet werden, die zu Trainings- oder Spielzwecken verwendbar sind. Beispiele für solche Raumstrukturen sind in den Fig.11 bis 18 und 20 bis 23 angegeben.

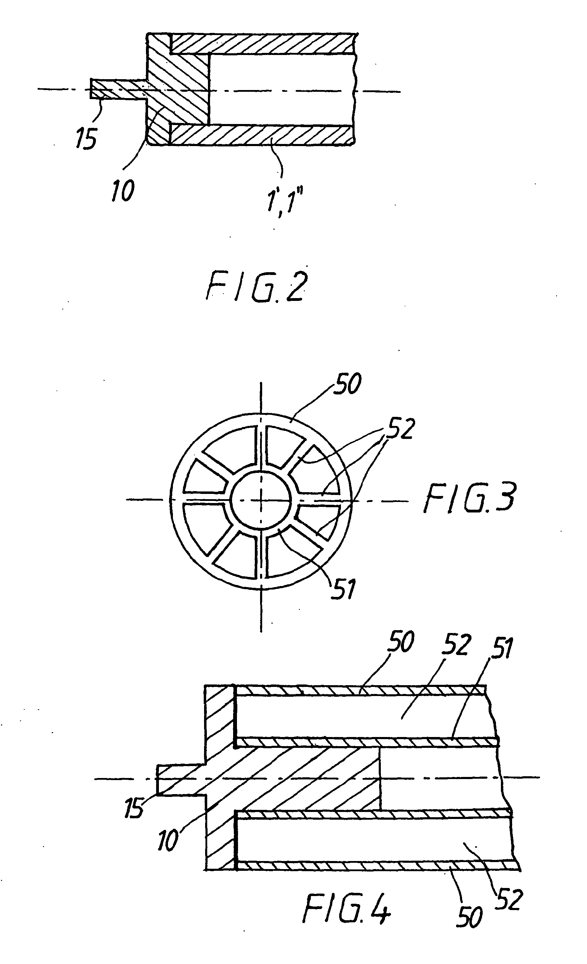

Im Ausführungsbeispiel gemäß Fig. sind die elastischen Längsglieder 1', 1" rohrförmig ausgebildet, wodurch diese weich und nachgiebig sind. Vorteilhaft anwendbar sind dafür handelsübliche Schaumstoffrohre, z.B. aus Polyäthylen-Weichschaum, mit einem Außendurchmesser von ungefähr 35 mm (Fig.2). Auch andere, insbesondere zylindrische Formen von Längsgliedern sind vorteilhaft. Diese können auch z.B. aus Gummistäben oder anderen ähnlichen Materialien und Formen gebildet sein.

Eine weitere Ausführungsvahante des elastischen Längsglieds ist in Fig. 3 gezeigt und besteht aus einem Kunststoffrohr, z.B. aus EPDM (Ethylen-Propylen-Dien-Terpolymer), mit einem äußeren und einem konzentrischen, inneren Rohrquerschnitt 50, 51, wobei der innere und der äußere Rohrquerschnitt 50, 51 durch radial verlaufende Distanzstege 52 miteinander verbunden sind.

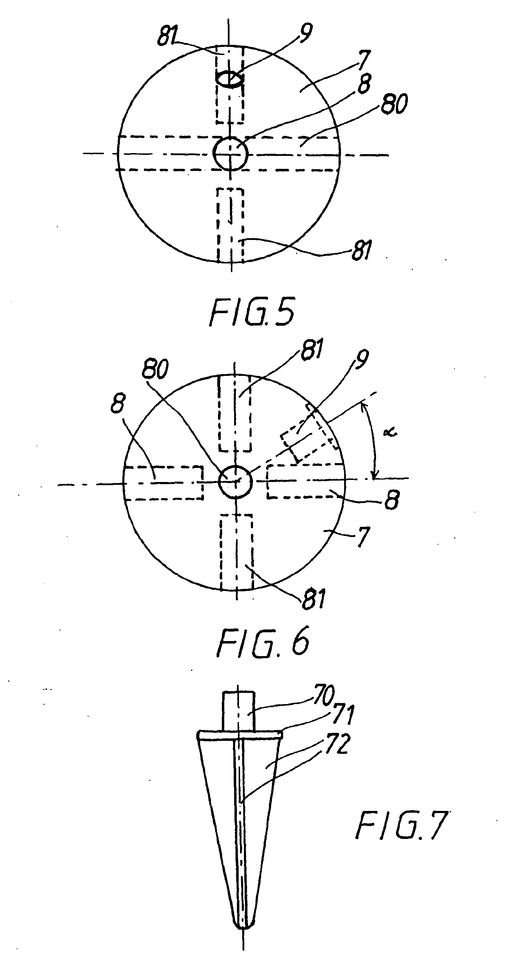

Die Verbindungselemente zum Verbinden von benachbarten Längsgliedern 1', 1" in der Ausführungsform gemäß Fig.5, 6 umfassen kugelförmige Verbindungsstücke 7, welche drei, aber zumindest zwei in unterschiedliche Richtungen verlaufende Löcher 8, 80, 81 aufweisen. Die Verbindungsstücke können aus Metall, Kunststoff, Holz o. dgl. gebildet sein.

An den Längsenden jedes Längsglieds 1', 1" sind gegengleiche Stifte 15 (Fig.2) ausgebildet, die in die Löcher 8, 80, 81 der Verbindungsstücke spielfrei einsteckbar sind.

Die Stift-Loch-Verbindung kann auch in umgekehrter Form verwirklicht sein, indem mehrere Stifte von dem Verbindungsstück wegstehen und im Längsglied passende, entlang dessen Mittelachse orientierte Löcher zum Einstecken der Stifte ausgebildet sind.

Fig.1 zeigt eine erfindungsgemäße Raumstruktur, bei der die Stifte 15 bereits in die Löcher der kugelförmigen Verbindungsstücke 7 eingesteckt sind.

Wie ferner aus Fig.5 und 6 ersichtlich weist das kugelförmige Verbindungsstück 7 drei orthogonal zueinander, durch seinen Mittelpunkt verlaufende Löcher 8, 80, 81 auf, wobei eines der Löcher ein Durchgangsloch 80 und die beiden anderen Löcher Sacklöcher 8, 81 sind.

Die Längsglieder 1', 1" sind an ihren Längsenden mit Abschlußelementen 10 versehen, an denen entlang der Mittelachse der Längsglieder 1', 1" die abstehenden Stifte 15 angeformt sind, die in die Löcher 8, 80, 81 der kugelförmigen Verbindungsstücke 7 in beliebiger Weise einsteckbar sind. Die Abschlußelemente 10 weisen einen zylindrischen Ansatz auf, dessen Durchmesser gleich dem Innendurchmesser der Schaumstoffiohre (Fig.2) oder dem Innendurchmesser des inneren Rohrquerschnitts 51 der Kunststoffrohre 50, 51 (Fig.4) entspricht, sodaß der Ansatz der Abschlußelemente 10 in die stirnseitigen Enden der Längsglieder 1', 1" eingesteckt und dort mit den Längsgliedern 1', 1" verklebt werden kann.

Gemäß dem in Fig.5 und Fig.6 gezeigten Ausfilhrungsbeispiel ist zusätzlich zu den drei orthogonalen Löchern 8, 80, 81 ein in der Ebene der orthogonalen Löcher 8, 81 verlaufendes und in einem Winkel α zur Mittelachse des Loches 8 angestelltes, zusätzliches Loch 9 ausgebildet. Vorzugsweise ist der Winkel α gleich 30°. Durch diese besondere Wahl des Winkels kann insbesondere auch eine wabenförmige Raumstruktur mit 60°-Winkeln, z.B. Sechsecke gemäß Fig.13 aufgebaut werden. Das schräg verlaufende Loch 9 bietet auch die Möglichkeit der Errichtung einer Barriere, bei der ein Längsglied 1' mit seinen Stiften 15 nur in die Berandung des schräg verlaufenden Loches 9 zweier Verbindungsstücke 7 eingelegt wird und somit bei leichtem Ankommen an dem querverlaufenden Längsglied 1' dieses zu Boden fallen kann, ohne daß eine springende Person am Längsglied hängen bleibt.

Die Größe des Winkels α und die Anzahl der durch die Verbindungsstücke 7 verlaufenden Löcher 8, 80, 81 kann beliebig variiert werden. Grundsätzlich können die Löcher 8 für die Einsteckstifte 15 somit in jeder beliebigen Winkellage innerhalb der kugelförmigen Verbindungsstücke 7 angeordnet sein.

In dem Ausführungsbeispiel gemäß Fig.1 können die Längsglieder 1', 1" normal und in einem Winkel zueinander verbunden werden. Daraus kann die gezeigte Anordnung zusammengebaut werden, die als Springbarriere dienen kann, wobei bei Anwendung eine oder mehrere Personen ständig versuchen müssen, über die einzelnen waagrechten Längsglieder 1" zu springen.

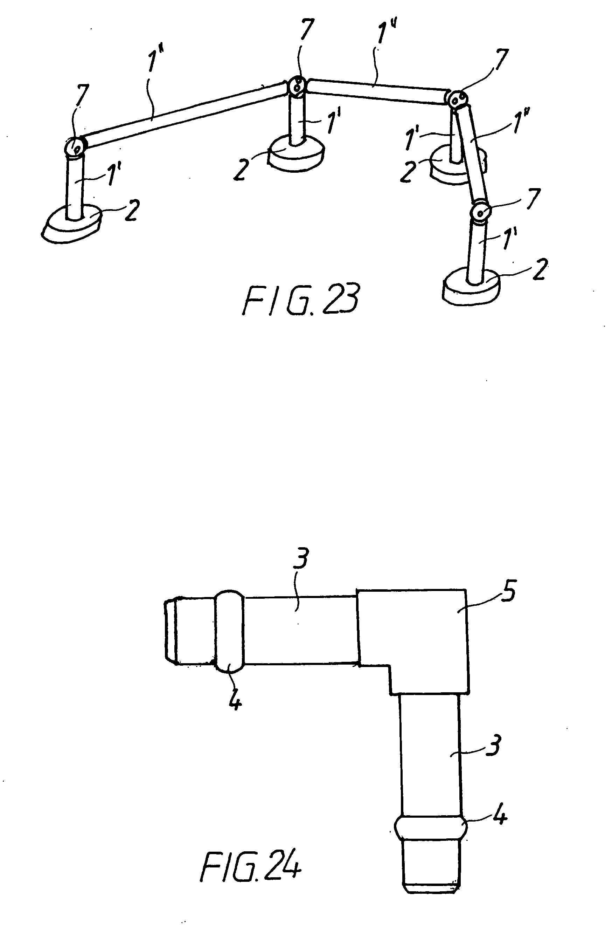

Bei Verwendung zu Spielzwecken können Spielhäuser oder -burgen gebaut werden, die mit Hilfe des erfindungsgemäßen Baukastensystems zusammengesetzt werden können. Um eine stabile Bauweise zu ermöglichen, ist in Fig.1 und in Fig.23 ein Teil der vorgesehenen Längsglieder 1' an jeweils einem Ende mit einer Standscheibe 2 verbunden, welche als Standfläche gegenüber dem Untergrund dient.

Bei der Springbarriere nach Fig.23 sind die mit den Standscheiben 2 versehenen, senkrecht stehenden Längsglieder 1' über waagrechte Längsglieder 1" voneinander beabstandet angeordnet , wobei jeweils zwei waagrechte Längsglieder 1" und ein senkrecht stehendes Längsglied 1' über die Verbindungselemente 7 miteinander verbunden sind. Der von den beiden waagrechten Längsgliedern 1" eingeschlossene Winkel ist je nach Ausführung der kugelförmigen Verbindungsstücke unterschiedlich wählbar.

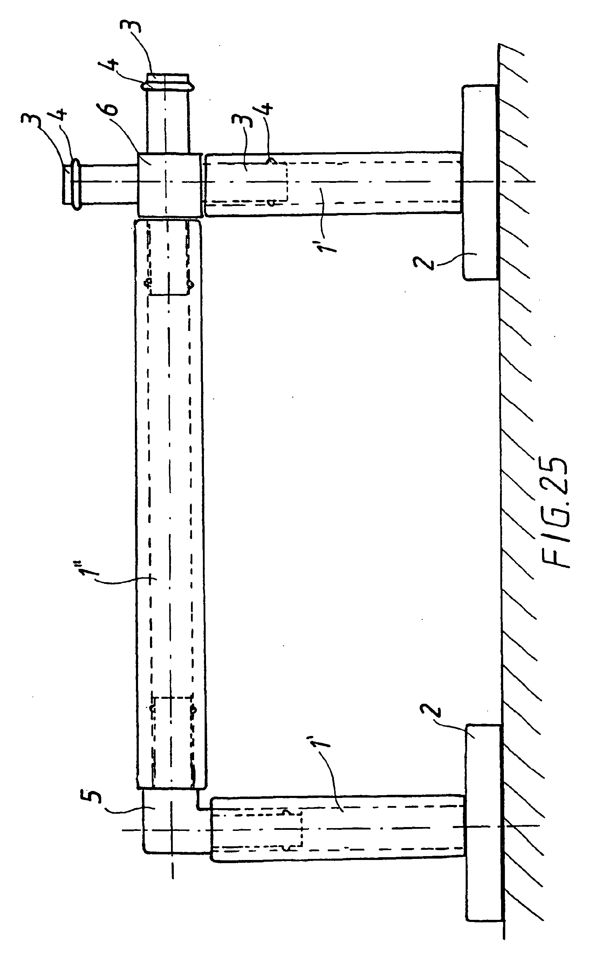

Zwei weitere, alternative Formen der Verbindung zwischen den Längsgliedern 1', 1" zeigt Fig.25. Eines der Verbindungselemente besteht dabei aus einem würfelförmigen Verbindungsstück 6 mit vier von den Würfelflächen abstehenden Einsteckstiften 3, welche in den Innendurchmesser der rohrförmigen elastischen Längsglieder 1', 1" einsteckbar sind. Die Anzahl der Würfelflächen mit Einsteckstiften 3 ist je nach Anwendungsfall frei variabel.

Das in Fig.25 auf der gegenüberliegenden Seite dargestellte Verbindungselement ist hingegen aus einem Winkelstück 5 mit zwei in einem rechten Winkel voneinander abstehenden Einsteckstiften 3 gebildet, welche ebenfalls in den Innendurchmesser der rohrförmigen elastischen Längsglieder 1', 1" einsteckbar sind.

Fig.24 zeigt dieses Winkelstück in detaillierter Darstellung. Bei beiden in Fig.25 gezeigten Arten von Verbindungselementen weisen die Einsteckstifte 3 wulstförmige Querschnittsverdickungen 4 auf, die einen sicheren Halt der Einsteckstifte 3 innerhalb der Längsglieder ermöglichen. Für eine möglichst große Vielfalt an realisierbaren Bauformen können in der Praxis eine Vielzahl von Winkelstücken 5 vorgesehen sein, die auch je nach Bedarf unterschiedliche Winkel zwischen den Einsteckstiften 3 einschließen können.

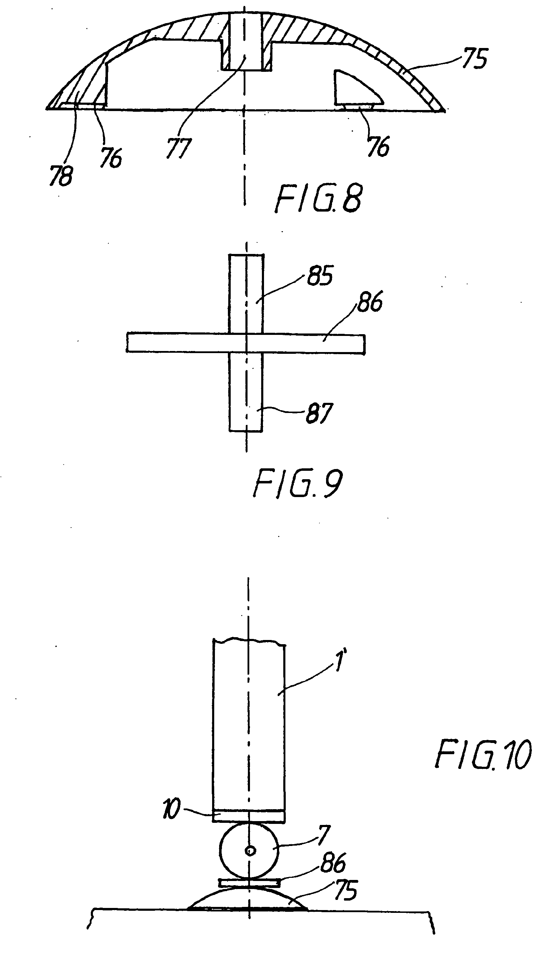

Fig. 10 zeigt ein Detail einer weiteren Ausführungsform des erfindungsgemäßen Baukastensystems. Eine gewölbte Standplatte 75 ist über ein Zwischenstück 86 mit einem kugelförmigen Verbindungsstück 7 verbunden, in welches der nicht sichtbare Stift 15 des Abschlußelements 10 eingesteckt ist, das mit dem Längsglied 1' verbunden ist.

Die gewölbte Standplatte 75 ist in Fig. 8 gezeigt, wobei ersichtlich ist, daß das Verbindungsglied 86 mit einem seiner Stifte 85, 87 (Fig.9) in eine an die Standplatte 75 angeformte Buchse 77 einsteckbar ist. Der jeweils andere Stift des Verbindungsglieds 86 ist in das kugelförmige Verbindungsstück 7 einsteckbar. Die Standplatte 75 steht auf drei an der Unterseite angeformten Füßen 76, auf denen ein rutschfester Belag aufgeklebt ist.

Für den Aufbau eines Raumstrukturelements im Freien kann anstelle einer Standplatte ein Erdkeil gemäß Fig.7 vorgesehen sein, der im wesentlichen aus kreuzförmig angeordneten, keilförmig verlaufenden Flügeln 72 und einem zylindrischen Ansatz 70 gebildet ist, der auf einem scheibenförmigen Abschlußscheibchen angeformt ist, welches einstückig mit den Flügeln 72 verbunden ist. Der zylindrische Ansatz 70 paßt spielfrei in die Löcher des kugelförmigen Verbindungsstücks 7, sodaß die Kugel auf den Ansatz 70 aufsteckbar ist und die Flügel 72 in den Untergrund getrieben werden können. Von dem kugelförmigen Verbindungsstück 7 aus kann das Raumstrukturelement beliebig weiter aufgebaut werden.

Fig. 11 zeigt ein würfelförmiges Raumstrukturelement bei dem die Verbindungsstücke 7 jeweils über die drei Löcher 8, 80, 81 mit den Stiften 15 der Längsglieder 1', 1" verbunden sind. Der sich so ergebende Würfel kann als Hindernis für die Sportausübung oder als Schutzhaus für Kinderspiele benutzt werden.

Sogenannte Gittersprünge können mit dem Raumstrukturelement gemäß Fig. 12 durchgeführt werden, wobei vor, zurück und seitlich gesprungen wird.

Das sechseckförmige Raumstrukturelement nach Fig. 13 bietet eine Grundlage für das sogenannte Stemspringen.

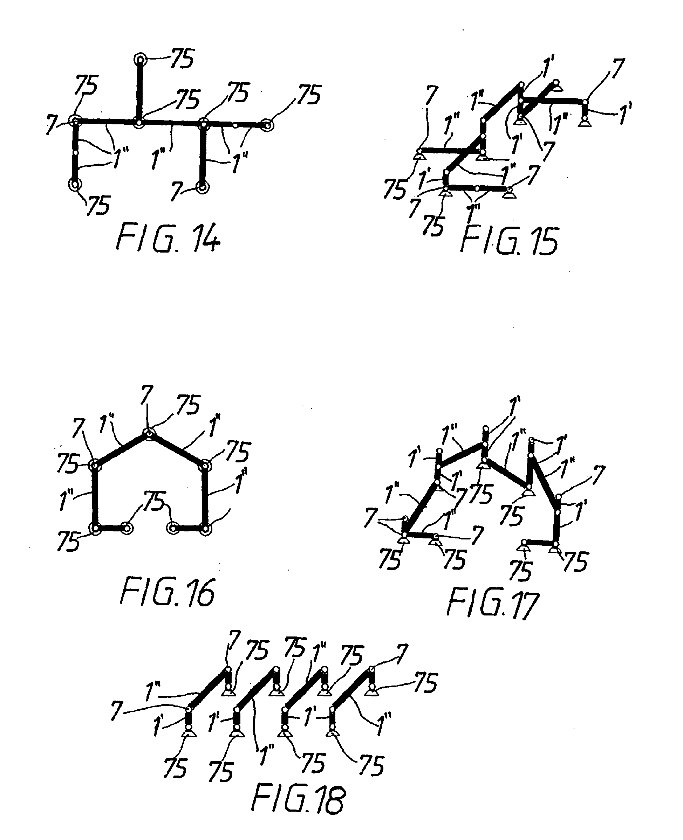

Die Raumstrukturelemente gemäß Fig. 14, 15 und 16, 17 ermöglichen die Übung Alpha-Jump und Gamma- Jump, die gehobene Anforderungen an die Kondition der trainierenden Person stellt. Dabei werden die gewölbten Standplatten 75 und die kugelförmigen Verbindungsstücke 7 verwendet. Die waagrechten Längsglieder 1" sind auf unterschiedlicher Höhe relativ zum Boden angeordnet.

Mehrere gleich beabstandete Sprunghürden sind in Fig. 18 aufgebaut, wobei die Höhe der einzelnen Hürden durch Wahl geeigneter vertikaler Längsglieder 1' beliebig veränderbar ist.

Es können auf die vorstehend beschriebene Weise praktisch unbegrenzt Raumstrukturen für Spiel und Sport aufgebaut werden. Auch Buchstaben und Zahlen können damit von Kindern beispielsweise im Kindergarten oder in der Schule in Übergröße zusammengesteckt werden, wodurch sich aufgrund der spielerischen Beschäftigung ein erhöhter Lerneffekt erreichen läßt.

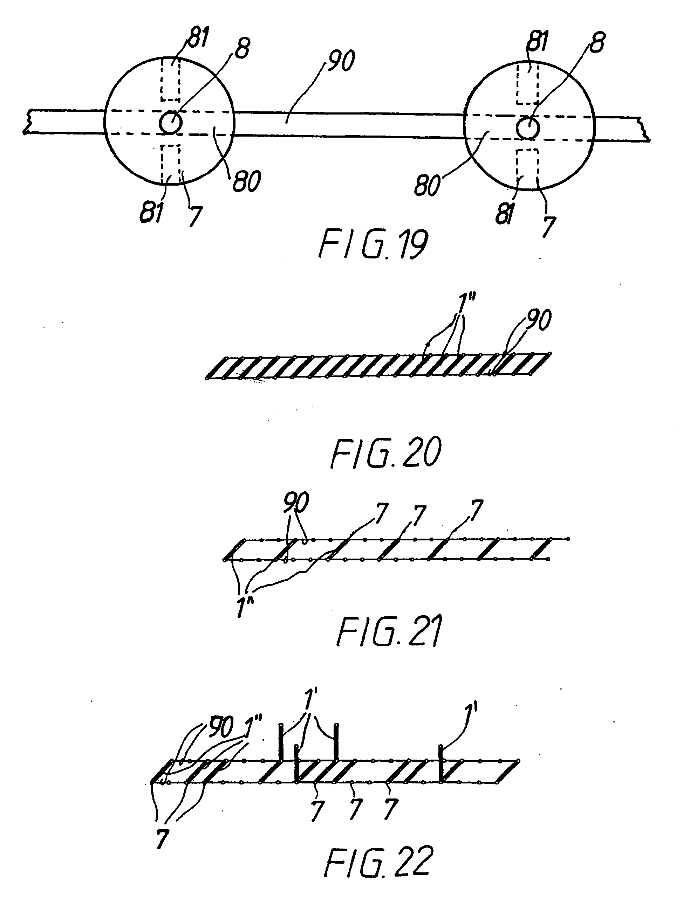

Fig. 19 zeigt einen Teil einer weiteren Variante des erfindungsgemäßen Baukastensystems. Dabei ist ein elastisches Band 90 mit einem kreisförmigen Querschnitt durch die Durchgangslöcher 80 der kugelförmigen Verbindungsstücke geführt, welche aufgrund der Elastizität des Bandes 90 an voneinander beabstandeten Stellen festsitzen. Das elastische Band ist zu diesem Zweck so dimensioniert, daß es im unbelasteten Zustand einen größeren Durchmesser und im gestreckten Zustand einen kleineren Durchmesser als das Durchgangsloch 80 der Verbindungsstücke 7 aufweist. Damit können die kugelförmigen Verbindungsstücke 7 im gestreckten Zustand des elastischen Bandes 90 auf dieses aufgeschoben und in gewünschter Weise positioniert werden. Beim Entspannnen des Bandes 90 vergrößert sich dessen Durchmesser soweit, daß das Band an jenen Stellen, an denen die Verbindungsstücke 7 sitzen, eine innerhalb der Durchgangslöcher 80 auftretende Einschnürung gegenüber dem außerhalb der Durchgangslöcher 80 frei verlaufenden Band 90 erfährt, wodurch sich eine elastische Fixierung der Verbindungsstücke 7 an den betreffenden Stellen ergibt, die jederzeit wieder durch Strecken des Bandes 90 aufgehoben werden kann.

Das elastische Band kann z.B. vollständig aus Gummi hergestellt sein oder eine Gummiseele aufweisen, die von einem gewebten Mantel umgeben ist. Letztgenannte Art von Seilen wird z.B. im Segelsport oder beim Bungee-Springen eingesetzt. Andere Arten von elastischen Bändern mit den vorgenannten Eigenschaften sind genauso anwendbar.

Beispiele der mit Hilfe des elastischen Bandes 90 realisierbaren Raumstrukturelemente sind in den Fig. 20, 21 und 22 dargestellt.

Das am Boden aufliegende Raumstrukturelement nach Fig.20 kann als Schritthürde verwendet werden, die mit kurzen schnellen Schritten fehlerfrei durchlaufen werden muß. In Fig.21 ist die Schrittweite durch Auslassen von jeweils zwei Längsgliedern 1" vergrößert.

Beim Raumstrukturelement nach Fig.22 sind zusätzlich noch vertikal in die Höhe ragende Längsglieder 1' vorgesehen, die ein Stangentraining beim Konditionstraining für den Schilauf ermöglichen.

## Patentansprüche

1. Baukastensystem zum Aufbau eines Raumstrukturelements, insbesondere zu Trainings- oder Spielzwecken, mit elastischen Längsgliedern (1', 1") und einer Vielzahl von Verbindungselementen (7, 10, 5, 6, 3), wobei jedes Längsglied (1', 1") an seinen Längsenden mittels der Verbindungselemente (7, 10, 5, 6, 3) mit jeweils einem oder mehreren Längsgliedern (1', 1") verbindbar ist, **dadurch gekennzeichnet, daß** alle Längsglieder (1', 1") elastisch sind, und daß alle Längsglieder (1', 1") aus Schaumstoff oder Gummi gebildet sind, wodurch das Raumstrukturelement als Ganzes nachgiebig gegenüber einer äußeren Belastung ist.

2. Baukastensystem nach Anspruch 1, **dadurch gekennzeichnet, daß** die Verbindungselemente Verbindungsstücke (7, 6) umfassen, welche zumindest zwei in unterschiedliche Richtungen verlaufende Löcher (8, 80, 81) oder zumindest zwei in unterschiedliche Richtungen verlaufende, abstehende Stifte (3) aufweisen, und daß an den Längsenden jedes Längsglieds (1', 1") gegengleiche Stifte (15) oder Löcher ausgebildet sind, die in die Löcher (8, 80, 81) oder in die Stifte (3) der Verbindungsstücke (7, 6) spielfrei einsteckbar sind.

3. Baukastensystem nach Anspruch 1, **dadurch gekennzeichnet, daß** die Verbindungselemente Verbindungsstücke (7), welche zumindest ein Durchgangsloch (80) und zumindest ein weiteres Loch (8, 81) aufweisen, und zumindest ein elastisches Band (90) mit einem vorzugsweise kreisförmigen Querschnitt umfassen, welches elastische Band (90) im unbelasteten Zustand einen größeren Durchmesser und im gestreckten Zustand einen kleineren Durchmesser als das Durchgangsloch (80) der Verbindungsstücke (7) aufweist.

4. Baukastensystem nach Anspruch 2 oder 3, **dadurch gekennzeichnet, daß** das Verbindungsstück (7) kugelförmig ausgebildet ist und zumindest drei orthogonal zueinander durch den Mittelpunkt verlaufende Löcher (8, 80, 81) aufweist, wobei eines der Löcher ein Durchgangsloch (80) und die beiden anderen Löcher Sacklöcher (8, 81) sind.

5. Baukastensystem nach Anspruch 4, **dadurch gekennzeichnet, daß** das kugelförmige Verbindungsstück (7) ein in der Ebene zweier orthogonaler Löcher (8, 81) verlaufendes und in einem Winkel (α) zur Mittelachse eines dieser Löcher (8) angestelltes, zusätzliches Loch (9) aufweist.

6. Baukastensystem nach Anspruch 5, **dadurch gekennzeichnet, daß** der Winkel (α) 30° beträgt.

7. Baukastensystem nach einem der Ansprüche 1 bis 6, **dadurch gekennzeichnet, daß** die elastischen Längsglieder (1', 1") zylindrisch, vorzugsweise rohrförmig, ausgebildet sind.

8. Baukastensystem nach Anspruch 7, **dadurch gekennzeichnet, daß** die elastischen Längsglieder (1', 1") jeweils aus einem Schaumstoffrohr gebildet sind.

9. Baukastensystem nach Anspruch 7, **dadurch gekennzeichnet, daß** die Längsglieder aus Kunststoffrohren mit einem äußeren und einem konzentrischen, inneren Rohrquerschnitt (50, 51) gebildet sind, wobei der innere und der äußere Rohrquerschnitt (50, 51) durch radial verlaufende Distanzstege (52) einstückig miteinander verbunden sind.

10. Baukastensystem nach Anspruch 7, 8 oder 9, **dadurch gekennzeichnet, daß** die elastischen Längsglieder (1', 1") an ihren Längsenden mit Abschlußelementen (10) versehen sind, an denen entlang der Mittelachse der Längsglieder (1', 1") abstehende Stifte (15) angeformt sind, die in die Löcher (8, 80, 81) der kugelförmigen Verbindungsstücke (7) einsteckbar sind.

11. Baukastensystem nach Anspruch 10, **dadurch gekennzeichnet, daß** die Abschlußelemente (10) einen zylindrischen Ansatz aufweisen, dessen Durchmesser gleich dem Innendurchmesser der Schaumstoffrohre oder dem Innendurchmesser des inneren Rohrquerschnitts (51) der Kunststoffrohre entspricht, sodaß der Ansatz der Abschlußelemente (10) in die stirnseitigen Enden der Längsglieder (1', 1") einsteckbar ist.

12. Baukastensystem nach Anspruch 1, **dadurch gekennzeichnet, daß** die Verbindungselemente jeweils aus einem würfelförmigen Verbindungsstück (6) mit zumindest zwei von den Würfelflächen abstehenden Einsteckstiften (3) gebildet sind, welche in den Innendurchmesser von rohrförmigen elastischen Längsgliedern (1', 1") einsteckbar sind.

13. Baukastensystem nach Anspruch 1, **dadurch gekennzeichnet, daß** die Verbindungselemente jeweils aus einem Winkelstück (5) mit zwei in einem rechten Winkel voneinander abstehenden Einsteckstiften (3) gebildet sind, welche in den Innendurchmesser der rohrförmigen elastischen Längsglieder (1', 1") einsteckbar sind.

14. Baukastensystem nach Anspruch 12 oder 13, **dadurch gekennzeichnet, daß** die Einsteckstifte (3) wulstförmige Querschnittsverdickungen (4) aufweisen.

15. Baukastensystem nach einem der vorhergehenden Ansprüche, **dadurch gekennzeichnet, daß** ein Teil der vorgesehenen Längsglieder (1') an einem Ende mit einer Standfläche, vorzugsweise einer Standscheibe (2, 75), verbunden sind.

16. Springbarriere unter Verwendung eines Baukastensystems nach einem der Ansprüche 1 bis 15, **dadurch gekennzeichnet, daß** die mit den Standscheiben (2) versehenen, senkrecht stehenden Längsglieder (1') über waagrechte Längsglieder (1") voneinander beabstandet angeordnet sind, wobei jeweils zwei waagrechte Längsglieder (1") und ein senkrecht stehendes Längsglied (1') über die Verbindungselemente (7, 10, 5, 6, 3) miteinander verbunden sind, und wobei der von den beiden waagrechten Längsgliedern (1") eingeschlossene Winkel unterschiedlich wählbar ist.

## Claims

1. A modular system for assembling an interior structure, especially for training or playing purposes, comprising elastic longitudinal members (1', 1") and a plurality of connecting elements (7, 10, 5, 6, 3), with each longitudinal member (1', 1") being connectable at its longitudinal ends by means of the connecting elements (7, 10, S, 6, 3) with one or several longitudinal members (1', 1") each, **characterized in that** all longitudinal members (1', 1") are elastic and that all longitudinal members (1', 1") are made of foamed material or rubber, as a result of which the interior structure as a whole is resilient against outside loading.

2. A modular system according to claim 1, **characterized in that** the connecting elements comprise joining pieces (7, 6) which comprise at least two holes (8, 80, 81) extending in different directions or at least two projecting pins (3) extending in different directions, that diametrically opposed pins (15) or holes are formed at the longitudinal ends of each longitudinal member (1', 1") which can be inserted in a play-free manner into the holes (8, 80, 81) or into the pins (3) of the joining pieces (7, 6).

3. A modular system according to claim 1, **characterized in that** the connecting elements comprise joining pieces (7) which comprise at least one through hole (80) and at least one further hole (8, 81) and at least one elastic band (90) with a preferably circular cross section, which elastic band (90) has a larger diameter in the unloaded state and a smaller diameter in the stretched state than the through hole (80) of the joining pieces (7).

4. A modular system according to claim 2 or 3, **characterized in that** the joining piece (7) is provided with a spherical configuration and comprises at least three holes (8, 80, 81) extending in an orthogonal manner relative to one another through the central point, with one of the holes being a through hole (80) and the two other holes being pocket holes (8, 81).

5. A modular system according to claim 4, **characterized in that** the spherical joining piece (7) comprises an additional hole (9) which extends in the plane of two orthogonal holes (8, 81) and is set at an angle (α) relative to the central axis of one of said holes (8).

6. A modular system according to claim 5, **characterized in that** the angle (α) is 30°.

7. A modular system according to one of the claims 1 to 6, **characterized in that** the elastic longitudinal members (1', 1") are provided with a cylindrical, preferably tubular configuration.

8. A modular system according to claim 7, **characterized in that** the elastic longitudinal members (1', 1") are each formed by a pipe made of foamed material.

9. A modular system according to claim 7, **characterized in that** the longitudinal members are made of plastic pipes with an outer and a concentric inner pipe cross section (50, 51), with the inner and the outer pipe cross section (50, 51) being integrally connected by radially extending spacer webs (52).

10. A modular system according to claim 7, 8 or 9, **characterized in that** the elastic longitudinal members (1', 1") are provided at their longitudinal ends with cover elements (10) on which pins (15) are formed which project along the central axis of the longitudinal members (1', 1") and which can be inserted into holes (8, 80, 81) of the spherical joining pieces (7).

11. A modular system according to claim 10, **characterized in that** the cover elements (10) comprise a cylindrical projection whose diameter is equal to the inside diameter of the foamed-material pipes or corresponds to the inside diameter of the inner pipe cross section (51) of the plastic pipes, so that the projection of the cover elements (10) can be inserted into the face-side ends of the longitudinal members (1', 1").

12. A modular system according to claim 1, **characterized in that** the connecting elements are each formed by a cubical joining piece (6) with at least two insertion pins (3) projecting from the cube surfaces, which pins can be inserted into the inside diameter of the tubular elastic longitudinal members (1', 1").

13. A modular system according to claim 1, **characterized in that** the connecting elements are each formed by an angular piece (5) with two insertion pins (3) which project from each other at a right angle and which can be inserted into the inside diameter of the tubular elastic longitudinal members (1', 1").

14. A modular system according to claim 12 or 13, **characterized in that** the insertion pins (3) comprise bulge-like thickenings (4) of the cross section.

15. A modular system according to one of the preceding claims, **characterized in that** a part of the provided longitudinal members (1') are joined at one end to a standing surface, preferably a standing disk (2, 75).

16. A jump barrier by using a modular system according to one of the claims 1 to 15, **characterized in that** the longitudinal members (1') which are provided with the standing disks (2) and are vertically upright are arranged spaced from one another via horizontal longitudinal members (1"), with two horizontal longitudinal members (1") and a perpendicular standing longitudinal member (1') each being joined to each other by means of the connecting elements (7, 10, 5, 6, 3), and with then angle enclosed by the two horizontal longitudinal members (1") being chosen differently.

## Revendications

1. Système de construction modulaire pour la construction d'un élément de structure d'intérieur, en particulier aux fins d'entraînement ou de jeu, avec des éléments longitudinaux élastiques (1', 1") et une pluralité d'éléments d'assemblage (7, 10, 5, 6, 3), dans lequel chaque élément longitudinal (1', 1") peut être relié à ses extrémités longitudinales, au moyen des éléments d'assemblage (7, 10, 5, 6, 3), à un ou plusieurs éléments longitudinaux (1', 1"), **caractérisé en ce que** tous les éléments longitudinaux (1', 1") sont élastiques et **en ce que** tous les éléments longitudinaux (1', 1") sont faits de mousse ou de caoutchouc, de sorte que l'élément de structure intérieure est flexible dans son ensemble sous l'action d'une contrainte extérieure.

2. Système de construction modulaire selon la revendication 1, **caractérisé en ce que** les éléments d'assemblage comprennent des pièces d'assemblage (7, 6) qui possèdent au moins deux trous (8, 80, 81) orientés dans des directions différentes ou au moins deux tenons (3) en saillie orientés dans des directions différentes, et **en ce que** des tenons (15) ou trous symétriques, pouvant être introduits sans jeu dans les trous (8, 80, 81) ou dans les tenons (3) des pièces d'assemblage (7, 6), sont formés aux extrémités longitudinales de chaque élément longitudinal (1', 1").

3. Système de construction modulaire selon la revendication 1, **caractérisé en ce que** les éléments d'assemblage comprennent des pièces d'assemblage (7) possédant au moins un trou traversant (80) et au moins un autre trou (8, 81), et au moins un ruban élastique (90) ayant une section de préférence circulaire, lequel ruban élastique (90) a dans l'état sans tension un plus grand diamètre et dans l'état étiré un plus petit diamètre que le trou traversant (80) des pièces d'assemblage (7).

4. Système de construction modulaire selon la revendication 2 ou 3, **caractérisé en ce que** la pièce d'assemblage (7) est de forme sphérique et possède au moins trois trous (8, 80, 81) qui passent par le centre en position orthogonale les uns par rapport aux autres, l'un des trous étant un trou traversant (80) et les deux autres trous des trous borgnes (8, 81).

5. Système de construction modulaire selon la revendication 4, **caractérisé en ce que** la pièce d'assemblage (7) sphérique possède un trou supplémentaire (9) passant dans le plan de deux trous (8, 81) orthogonaux et formant un angle (α) par rapport à l'axe médian de l'un de ces trous (8).

6. Système de construction modulaire selon la revendication 5, **caractérisé en ce que** l'angle (α) est de 30°.

7. Système de construction modulaire selon l'une quelconque des revendications 1 à 6, **caractérisé en ce que** les éléments allongés élastiques (1', 1") ont une forme cylindrique, de préférence tubulaire.

8. Système de construction modulaire selon la revendication 7, **caractérisé en ce que** les éléments longitudinaux élastiques (1', 1") sont formés chacun d'un tube de mousse.

9. Système de construction modulaire selon la revendication 7, **caractérisé en ce que** les éléments allongés sont formés de tubes de plastique ayant une section de tube extérieure et une section intérieure concentriques (50, 51), la section de tube intérieure et la section de tube extérieure (50, 51) étant reliées l'une à l'autre d'un seul tenant par des barrettes d'écartement radiales (52).

10. Système de construction modulaire selon la revendication 7, 8 ou 9, **caractérisé en ce que** les éléments longitudinaux élastiques (1', 1") sont dotés à leurs extrémités longitudinales d'éléments de terminaison (10) sur lesquels sont formés, le long de l'axe médian des éléments longitudinaux (1', 1"), des tenons (15) en relief qui peuvent s'engager dans les trous (8, 80, 81) des pièces d'assemblage (7) sphériques.

11. Système de construction modulaire selon la revendication 10, **caractérisé en ce que** les éléments de terminaison (10) possèdent un bout cylindrique dont le diamètre correspond au diamètre intérieur des tubes en mousse ou au diamètre intérieur de la section de tube intérieure (51) des tubes en plastique, de sorte que le bout des éléments de terminaison (10) peut être inséré dans les extrémités frontales des éléments longitudinaux (1', 1").

12. Système de construction modulaire selon la revendication 1, **caractérisé en ce que** les éléments d'assemblage se composent d'une pièce d'assemblage (6) cubique avec au moins deux tenons d'insertion (3) dépassant des surfaces du cube, qui peuvent être insérés dans le diamètre intérieur des éléments longitudinaux (1', 1") tubulaires élastiques.

13. Système de construction modulaire selon la revendication 1, **caractérisé en ce que** les éléments d'assemblage sont formés chacun d'une équerre (5) avec deux tenons d'insertion (3) formant un angle droit entre eux, qui peuvent être insérés dans le diamètre intérieur des éléments longitudinaux (1', 1") tubulaires élastiques.

14. Système de construction modulaire selon la revendication 12 ou 13, **caractérisé en ce que** les tenons d'insertion (3) possèdent des épaississements de la section formant des bourrelets (4).

15. Système de construction modulaire selon l'une quelconque des revendications précédentes, **caractérisé en ce qu'**une partie des éléments longitudinaux (1') prévus est reliée à une extrémité à une surface d'appui, de préférence un disque d'appui (2, 75).

16. Barrière de saut utilisant un système de construction modulaire selon l'une quelconque des revendications 1 à 15, **caractérisé en ce que** les éléments longitudinaux (1') verticaux assemblés aux disques d'appui (2) sont écartés les uns des autres par des éléments longitudinaux horizontaux (1"), deux éléments longitudinaux horizontaux (1") et un élément longitudinal vertical (1') étant reliés entre eux par les éléments d'assemblage (7, 10, 5, 6, 3), et l'angle formé par les deux éléments longitudinaux horizontaux (1") pouvant être ajusté de différentes manières.
